# FASCICULE DE BREVET EUROPEEN

(11) **EP 0 916 032 B1**
(45) Date de publication et mention de la délivrance du brevet: **04.08.2004**
(21) Numéro de dépôt: 98928379.1
(22) Date de dépôt: 28.05.1998
(51) Int. Cl.: F16D 13/58, F16D 13/75

(54) **EMBRAYAGE A FRICTION MUNI D'UN DISPOSITIF DE RATTRAPAGE D'USURE**
REIBUNGSKUPPLUNG MIT NACHSTELLVORRICHTUNG
FRICTION CLUTCH EQUIPPED WITH WEAR TAKE-UP DEVICE

(30) Priorité: 30.05.1997 FR 9706656; 05.06.1997 FR 9706962
(43) Date de publication de la demande: 19.05.1999
(73) Titulaire: VALEO EMBRAYAGES s.a.s., 80009 Amiens Cedex 1 (FR)
(72) Inventeur: DOREMUS, Olivier, F-62690 Izel lez Hameau (FR)
(74) Mandataire: Lemaire, Marc
(86) Numéro de dépôt international: PCT/FR1998/001072
(87) Numéro de publication internationale: WO 1998/054479

(56) Documents cités:
- DE-A- 4 201 132
- FR-A- 2 688 558
- FR-A- 2 753 503
- GB-A- 2 286 640
- GB-A- 2 294 301
- GB-A- 2 310 898

## Description

La présente invention concerne un mécanisme d'embrayage pour embrayage à friction, en particulier pour véhicule automobile, et se rapporte plus particulièrement à un mécanisme d'embrayage équipé d'un dispositif de compensation de l'usure due notamment à l'usure des garnitures de friction, ledit dispositif, dit ci-après dispositif de rattrapage d'usure, opérant au fur et à mesure de l'usure desdites garnitures.

Le document GB 2 294 301 A montre un mécanisme d'embrayage d'après le préambule de la revendication 1.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est attaché au moins un plateau de pression.

Le plateau de pression est solidaire en rotation du couvercle et du plateau de réaction tout en pouvant se déplacer axialement sous la sollicitation de moyens embrayeurs à action axiale et commandés par des moyens débrayeurs, comportant généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Le diaphragme commande le déplacement axial du plateau de pression lorsqu'il est actionné par une butée de débrayage.

Au cours de la durée de vie d'un tel embrayage, les garnitures de friction ainsi que les contre-matériaux, plateau de pression et plateau de réaction, s'usent, ce qui provoque une variation de la position du plateau de pression et celles des moyens élastiques à action axiale et de la butée de débrayage, d'où il s'ensuit une variation de la force de serrage entre le disque de friction, d'une part, et les plateaux de pression et de réaction, d'autre part, en raison des modifications des conditions de travail du diaphragme, et la force nécessaire pour débrayer s'en trouve affectée. En dotant un tel embrayage d'un dispositif de rattrapage d'usure, on évite ces inconvénients, le diaphragme, ainsi que la butée de débrayage, usuellement en appui constant sur le diaphragme, occupant la même position lorsque l'embrayage est en position d'engagement.

On a proposé, notamment dans la demande de brevet français FR-A-2 753 503 déposée le 17 septembre 1996 sous le numéro 96 11297, un mécanisme d'embrayage pour embrayage à friction, en particulier pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, ledit mécanisme comprenant un plateau de pression, un couvercle destiné à être fixé sur le plateau de réaction, des moyens embrayeurs, à action axiale et commandés par des moyens débrayeurs, agissant entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit mécanisme comportant également un dispositif de rattrapage d'usure comprenant des moyens à rampes ayant des rampes disposées circonférentiellement, placés axialement entre les moyens d'appui et le plateau de pression, lesdites rampes étant adaptées à coopérer avec des moyens de contre-rampes.

Bien entendu, l'embrayage étant équipé d'un dispositif de rattrapage d'usure, il est nécessaire, après qu'il a assuré sa fonction, de le mettre dans sa position dite à zéro correspondant aux garnitures à l'état neuf, après changement du disque de friction dont les garnitures ont été usées : des moyens ont déjà été prévus pour que cette opération soit facile à mettre en oeuvre, comme cela est par exemple décrit dans la demande de brevet français déposée le 30 Mai 1997 sous le numéro 97 06655.

Il est intéressant que cette opération puisse être également effectuée sur le mécanisme d'embrayage seul, constitué du couvercle, des moyens embrayeurs, du dispositif de rattrapage d'usure et du plateau de pression, constituant un sous-ensemble, avant montage sur le plateau de réaction ou volant.

Une telle opération est malaisée lorsque les moyens embrayeurs, se détendant, lorsque le mécanisme est dans cette position, de stockage, coincent en quelque sorte axialement les moyens à rampes contre le plateau de pression lui-même retenu, par rapport au couvercle, par les moyens de rappel ou autres butées axiales.

Le mécanisme d'embrayage étant équipé d'un dispositif de rattrapage d'usure, les moyens embrayeurs occupent, comme expliqué ci-dessus, toujours quasiment la même position de travail par rapport au couvercle. Ceci est mis à profit par la présente invention pour limiter la course des moyens embrayeurs par rapport au couvercle, l'embrayage étant du type tiré et les moyens embrayeurs comportant un diaphragme.

En effet, dans le cas d'un embrayage du type tiré, dans lequel le diaphragme prend appui sur le couvercle en des points situés radialement à l'extérieur par rapport aux moyens d'appui, dans la position de stockage du mécanisme le diaphragme a tendance à s'éloigner du couvercle ; jusqu'ici, pour limiter cette course d'éloignement, on a proposé, dans un mécanisme d'embrayage non équipé d'un dispositif de rattrapage d'usure, de doter le plateau de pression de moyens de butée, placés à sa périphérie externe, adaptés à coopérer avec la face externe d'un rebord radial du couvercle dans la position de stockage du mécanisme d'embrayage : une telle disposition présente l'inconvénient que la course d'éloignement doit être prévue suffisamment grande pour permettre au plateau de pression de s'éloigner du couvercle en fonctionnement au fur et à mesure de l'usure des garnitures du disque de friction ; cette course d'éloignement, encore trop longue en stockage, ne facilite pas l'opération de montage du mécanisme sur le plateau de réaction : pour éviter d'avoir à utiliser de longues vis pour cette fixation, on place, au droit des moyens de butée, des cales de stockage, ce qui nécessite des opérations de pose et de dépose.

On a également proposé de limiter la course d'éloignement du diaphragme en faisant coopérer celui-ci, en stockage, avec des moyens de butée portés par le couvercle : c'est le cas notamment de certaines variantes décrites dans le document FR-A-2 135 637 ; on retrouve, ici aussi, les mêmes inconvénients ci-dessus, les cales de stockage étant par ailleurs plus difficiles à poser.

La présente invention permet d'éviter les inconvénients ci-dessus.

Selon l'invention, un mécanisme d'embrayage, pour embrayage à friction du genre ci-dessus, est caractérisé par le fait que sont prévus des moyens de butée portés par le couvercle et adaptés à limiter la course des moyens embrayeurs, dans la position de stockage du mécanisme, au voisinage de leur position de travail.

Ainsi, du fait de la présence du dispositif de rattrapage d'usure, on est sûr que les moyens embrayeurs et/ou débrayeurs du mécanisme monté sur le plateau de réaction ne viendront pas en contact avec lesdits moyens de butée ni avec tout élément constitutif du dispositif de rattrapage d'usure autre que les moyens d'appui.

Ainsi les moyens embrayeurs sont constitués par un diaphragme qui prend appui sur le couvercle en des points situés radialement à l'extérieur par rapport aux moyens d'appui, l'embrayage étant du type tiré.

Avantageusement, les moyens de butée sont constitués par des pattes issues du fond du couvercle et comprenant une partie axiale qui traverse des trous du diaphragme et dont l'extrémité libre est pliée dans un plan globalement perpendiculaire à l'axe de l'embrayage pour constituer un rebord radial.

Selon une variante, les moyens de butée sont constitués par des colonnettes ayant un corps qui traverse des trous du diaphragme, une queue sertie sur le fond du couvercle et une tête sur laquelle est définie une ligne de butée qui fait face au fond du couvercle et avec laquelle le diaphragme est adapté à coopérer en position de stockage.

Selon une autre variante, les moyens de butée sont constitués d'une couronne placée entre le plateau de pression et le diaphragme et solidarisée au fond du couvercle par des rivets traversant des trous du diaphragme.

De préférence, le diaphragme coopère, dans la position de stockage du mécanisme, directement avec les moyens de butée.

Avantageusement, le diaphragme coopère, dans la position de stockage du mécanisme, avec les moyens de butée par l'intermédiaire d'une rondelle élastique d'assistance.

Selon une autre variante, les moyens de butée sont constitués par une rondelle élastique d'assistance placée axialement entre le plateau de pression et le diaphragme et fixée au fond du couvercle par des rivets traversant des trous du diaphragme.

Lorsqu'il y a une rondelle élastique d'assistance, avantageusement la rondelle élastique d'assistance présente à sa périphérie interne des extensions délimitées par des fentes radiales et destinées à coopérer avec les doigts du diaphragme.

De préférence, les caractéristiques élastiques de la rondelle d'assistance sont choisies en sorte que, lorsque l'embrayage est embrayé, la friction d'embrayage étant neuve, l'action exercée par la rondelle d'assistance est très faible, voire nulle.

Avantageusement, les caractéristiques élastiques de la rondelle d'assistance sont choisies en sorte que, pendant l'opération de débrayage, l'action exercée par la rondelle d'assistance croît puis décroît jusqu'à une valeur déterminée qui peut être très faible voire nulle l'embrayage étant débrayé.

L'invention a également pour objet un sous-ensemble constitué d'un couvercle et d'un diaphragme, dans lequel le diaphragme est en appui sur le couvercle par sa périphérie externe, sous-ensemble dont le couvercle et le diaphragme ont les caractéristiques du couvercle et du diaphragme du mécanisme ci-dessus.

Pour mieux faire comprendre l'objet de l'invention, on va décrire maintenant, à titre d'exemples, purement illustratifs et non limitatifs, des modes de réalisation représentés sur les dessins annexés dans lesquels :
- la figure 1 est une vue partielle en coupe d'un mécanisme d'embrayage selon l'invention, équipé d'un dispositif de rattrapage d'usure dans sa position qui correspond à l'état embrayé de l'embrayage, garnitures neuves ;
- la figure 2 est une vue en coupe du mécanisme d'embrayage selon la figure 1 dans sa position de stockage ;
- la figure 3 est une vue analogue à la figure 1 et correspond à une variante ;
- la figure 4 est une vue en coupe selon IV-IV de la figure 3 montrant les moyens de butée seuls ;
- la figure 5 est une vue montrant le mécanisme de la figure 3 équipé d'une rondelle d'assistance ;
- la figure 6 est une vue partielle selon la flèche VI de la figure 5 ;
- la figure 7 est une vue en coupe du mécanisme d'embrayage selon les figures 5 et 6 dans sa position de stockage ;
- la figure 8 est une vue analogue à la figure 1 et correspond à une autre variante ;
- la figure 9 est une vue montrant le mécanisme de la figure 8 équipé d'une rondelle d'assistance ;
- la figure 10 est une vue analogue à la figure 1 et correspond à encore une autre variante, le mécanisme étant équipé d'une rondelle d'assistance ;
- la figure 11 est une vue partielle selon la flèche XI de la figure 11.

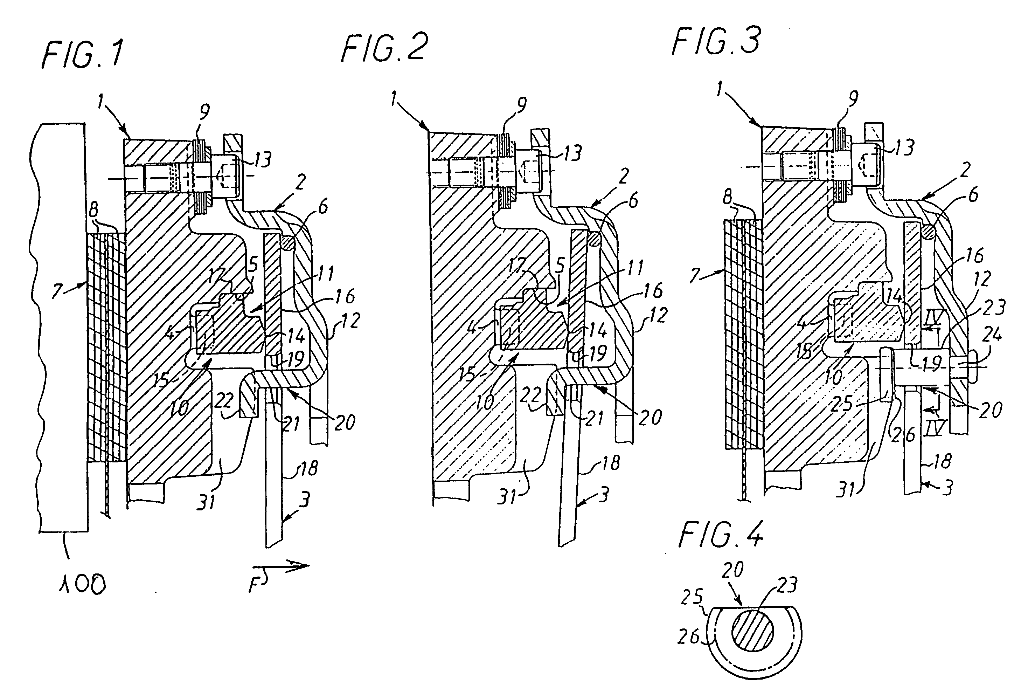

En se reportant aux figures 1 à 4, on voit un mécanisme d'embrayage à friction, notamment pour véhicule automobile, qui comprend un plateau de pression 1 destiné à coopérer avec un disque de friction 7, portant à sa périphérie externe des garnitures de friction 8, qui coopère lui-même avec un plateau de réaction. Le plateau de réaction, représenté schématiquement en 100 à la figure 1, est destiné à être calé en rotation sur un arbre menant, tel que le vilebrequin du moteur à combustion interne. Le disque de friction 7 est solidaire en rotation d'un arbre mené tel que l'arbre d'entrée de la boîte de vitesses.

Le plateau de pression 1 est solidaire en rotation d'un couvercle 2 ici de forme creuse par l'intermédiaire de languettes tangentielles 9 qui, élastiques, constituent en même temps des moyens de rappel du plateau de pression 1 vers le couvercle 2, ici métallique en tôle emboutie.

Ce couvercle 2 comporte un fond 12 et des moyens pour sa fixation au plateau de réaction, éventuellement divisé pour formation d'un volant amortisseur ; le couvercle 2 est globalement en forme d'assiette creuse et comporte à sa périphérie externe un rebord radial formant des moyens de fixation du couvercle 2 au plateau de réaction, ledit rebord étant doté de trous pour passage d'organes de fixation, tels que des vis, du couvercle au plateau de réaction.

Le plateau de pression 1, tout en étant solidaire en rotation du couvercle 2, est donc déplaçable axialement par rapport au couvercle 2 sous la sollicitation de moyens embrayeurs, à action axiale et commandés par des moyens débrayeurs, ici un diaphragme 3 prenant appui sur le couvercle 2, par la périphérie externe de sa partie 16 en forme de rondelle Belleville, sur un jonc 6 placé à la périphérie interne du fond 12 du couvercle 2, l'embrayage étant du type tiré ; l'opération de débrayage est effectuée en agissant sur l'extrémité des doigts 18, du diaphragme 3 dans le sens de la flèche F de la figure 1 ; la rondelle Belleville 16 du diaphragme 3 est en contact avec un appui 14 décrit ci-après.

Pour maintenir, lorsque l'embrayage est embrayé, les moyens élastiques à action axiale 3 dans une position indépendante de l'usure des garnitures 8 du disque de friction 7, et dans une moindre mesure l'usure des plateaux de pression 1 et de réaction dont les faces, dites de friction, s'usent au contact des garnitures 8 du disque 7, il est prévu un dispositif de rattrapage d'usure 10.

Le dispositif de rattrapage d'usure 10 comprend des moyens à rampes 11 disposées circonférentiellement ; plus précisément, ces moyens à rampes 11 sont constitués d'un anneau présentant des rampes 15 disposées circonférentiellement ; ledit anneau présente également des zones d'appui 14 constituées par une arête supérieure arrondie centrée sur l'axe de l'embrayage placée axialement à l'extérieur par rapport aux rampes 15.

Le plateau de pression 1 présente, ici venus de moulage, sur sa face tournée vers le fond 12 du couvercle 2, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme 3 et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1.

Les moyens à rampes 11 présentent, à leur périphérie externe, une paroi cylindrique 17 parallèle à l'axe de l'embrayage coopérant avec une creusure cylindrique 5 de même axe que présente le plateau de pression 1 sur sa face en regard du fond du couvercle 2 en sorte que les moyens à rampes 11 sont centrés par rapport au plateau de pression 1.

Le dispositif de rattrapage d'usure 10 peut être de tout type ; il sera simplement indiqué ici qu'il peut comprendre par ailleurs une roue à rochet portée par un axe qui porte également une vis sans fin, lequel axe est porté par un support adapté à recevoir un organe élastique en forme générale de C dont une extrémité, en forme de T, porte en bout une languette de commande adaptée à coopérer avec les dents de la roue à rochet.

Le filet et le pas de la vis sans fin sont adaptés à une denture portée par une pièce en tôle pliée en forme générale de Z aplati et fixée par ses extrémités sur des bossages du plateau de pression 1. Pour plus de précisions, on se reportera par exemple au document FR-A-2 753 503 précité.

Selon l'invention, le mécanisme d'embrayage comporte des moyens de butée 20 pour limiter en stockage la course du diaphragme 3 par rapport au couvercle 2 au voisinage de sa position de travail ; par ailleurs, ces moyens de butée 20 permettent d'éviter toute interférence entre le diaphragme 3 et ici la roue à rochet du dispositif de rattrapage d'usure 10 implantée radialement en dessous des moyens à rampes 11.

Ici, ces moyens de butée 20 sont constitués par des pattes découpées pliées issues du fond 12 du couvercle 2.

Comme on le sait, le diaphragme 3 comprend une partie périphérique 16 en forme de rondelle Belleville, qui coopère avec les appuis 6 et 14 et qui est prolongée vers l'intérieur par des doigts 18 séparés par des fentes radiales qui débouchent dans des trous 19 régulièrement répartis à la périphérie interne de la partie périphérique 16 du diaphragme 3. Les trous 19 sont plus larges que les fentes radiales et forment les fonds de celles-ci.

Les pattes 20 constituant les moyens de butée sont régulièrement réparties périphériquement et peuvent être au nombre de trois, quatre ou plus. Les pattes comprennent une partie axiale 21 qui traverse des trous 19 du diaphragme 3 dont l'extrémité libre est pliée dans un plan globalement perpendiculaire à l'axe de l'embrayage pour constituer un retour radial 22 dirigé ici vers l'axe de l'embrayage ; c'est avec la face du rebord 22 qui est tournée vers le fond 12 du couvercle 2 que coopère le diaphragme 3 dans la position de stockage du mécanisme, comme le montre la figure 2 ; en limitant la course du diaphragme 3 en stockage, on limite celle du plateau de pression 1 ; avantageusement, le plateau de pression 1 présente, en regard du fond 12 du couvercle 2, des saignées radiales 31 dans lesquelles peuvent s'étendre les retours radiaux 22 des pattes 20.

On appréciera par ailleurs que grâce à l'invention on a réalisé, dans le cadre d'un mécanisme du type tiré, un sous-ensemble comprenant le couvercle 2 et le diaphragme 3, ce qui facilite les manipulations ainsi que les opérations de fabrication du mécanisme.

De plus, grâce aux moyens de butée 20, le diaphragme 3 est centré par rapport au couvercle, ce qui évite d'avoir à prévoir des moyens de centrage particuliers pour le diaphragme 3, tels que par exemple des goupilles axiales implantées dans le plateau de pression 1, comme cela est fait jusqu'ici.

Selon la variante de la figure 3, les moyens de butée 20 sont constitués par des colonnettes ayant un corps 23 cylindrique traversant des trous 19 du diaphragme 3, une queue 24 cylindrique, de diamètre plus petit que celui du corps 23, sertie sur le fond 12 du couvercle 2, et une tête 25, de forme semi cylindrique et de diamètre supérieur à celui du corps 23 ; sur cette tête 25, du côté qui fait face au fond 12 du couvercle 2, est définie une ligne de butée 26, semi-circulaire, pour le diaphragme 3, de forme légèrement bombée.

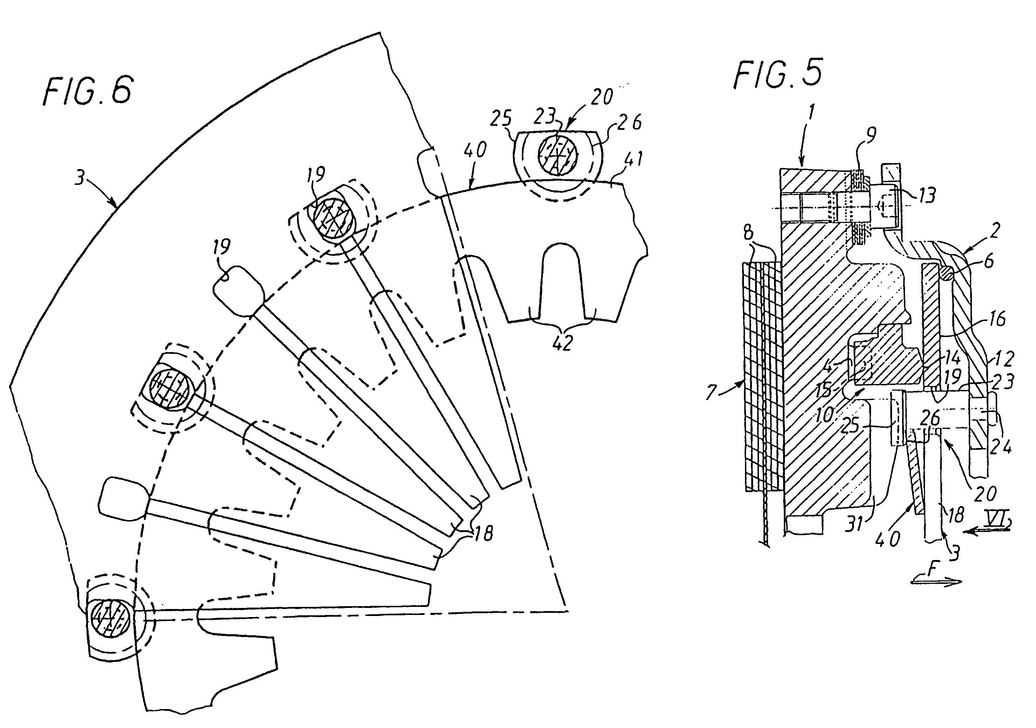

Les figures 5 et 6 montrent le mécanisme d'embrayage des figures 3 et 4 incorporant une rondelle élastique d'assistance 40 agissant en parallèle avec le diaphragme 3, pour assister l'opération de débrayage.

La rondelle élastique d'assistance 40 prend appui, d'un côté, sur un élément fixe par rapport au couvercle 2 et, de l'autre côté, sur les doigts 18 du diaphragme 3 en sorte qu'elle est adaptée à agir dans le sens du débrayage de l'embrayage.

Plus précisément, la rondelle d'assistance 40 est disposée axialement entre le diaphragme 3 et le plateau de pression 1, en étant placée radialement au droit des doigts 18 du diaphragme 3, globalement radialement à l'intérieur de la zone délimitée par les trous 19 du diaphragme 3 ; ici, la rondelle d'assistance 40 comprend une partie externe rondelle Belleville 41 prolongée radialement vers l'axe selon des extensions 42 séparées par des fentes radiales ; ces extensions 42 s'étendent globalement vers l'extrémité libre des doigts 18 du diaphragme 3.

Ici, la périphérie externe de la partie rondelle Belleville 41 de la rondelle d'assistance 40 est en appui sur la ligne de butée 26 qui fait face au fond 12 du couvercle 2 et que présente la tête 25 des colonnettes 20.

La rondelle d'assistance 40 a des caractéristiques élastiques telles que, lorsque l'embrayage est embrayé et que les garnitures 8 du disque de friction 7 sont neuves, elle ne génère aucun effort axial sur les doigts 18 du diaphragme 3 ; l'effort de serrage des garnitures pincées entre le plateau de réaction 100 et le plateau de pression 1 est celui qui est donné par la partie périphérique 16 du diaphragme 3 ; lorsque l'on agit sur les doigts 18 du diaphragme 30 dans le sens de la flèche F, pour le débrayage de l'embrayage, la rondelle d'assistance 40 agit sur les doigts 18 du diaphragme 3, dans le sens de la flèche F, en prenant appui sur le couvercle 2 par l'intermédiaire des colonnettes 20 soulageant ainsi l'effort nécessaire au débrayage.

Grâce à la présence du dispositif de rattrapage d'usure 10, les positions du diaphragme 3 et de la rondelle d'assistance 40, à l'embrayage et au débrayage, sont fixes, indépendantes de l'usure des garnitures : l'assistance au débrayage fournie par la rondelle d'assistance 40 est donc indépendante de cette usure, ainsi que l'effort de serrage.

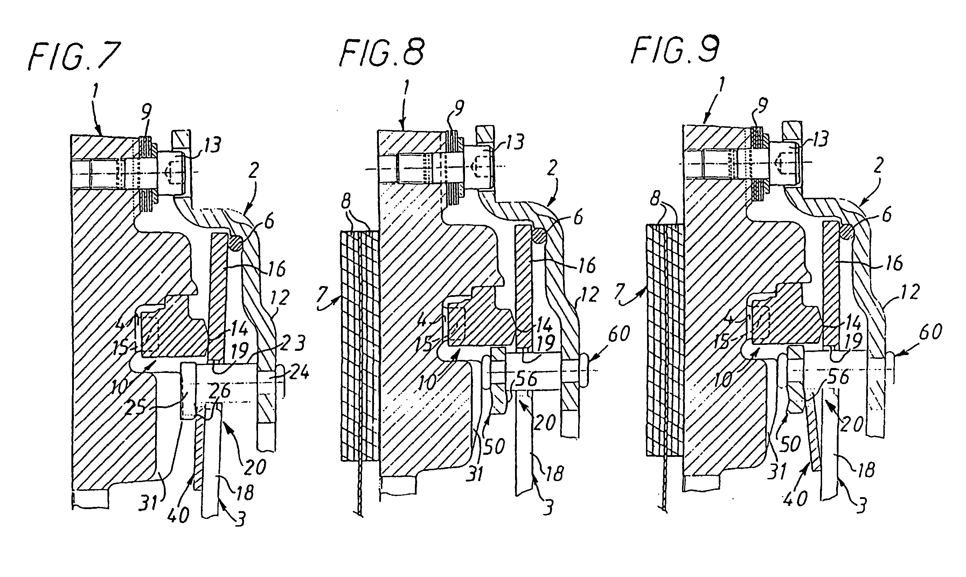

Ici, dans la position de stockage du mécanisme, montrée sur la figure 7, c'est par l'intermédiaire de la rondelle d'assistance 40 que les moyens de butée 20 limitent la course du diaphragme 3.

Comme on le voit, grâce à l'invention, une rondelle d'assistance 40 a été associée à un diaphragme et à un dispositif de rattrapage d'usure sans qu'il soit nécessaire de modifier le couvercle 2 ; par ailleurs, celle-ci a été placée dans un espace libre entre le plateau de pression 1 et le diaphragme 3 et sa présence n'a pas affecté l'encombrement axial du mécanisme d'embrayage.

Selon la variante de la figure 8, les moyens de butée 20 comprennent une couronne 50 circulaire, centrée sur l'axe du mécanisme d'embrayage et munie d'une ligne de butée 56 circulaire également centrée sur ledit axe ; s'étendant dans un plan transversal entre le plateau de pression 1 et le diaphragme 3, la couronne 50 est solidarisée au fond 12 du couvercle 2 par des rivets 60 doublement épaulés, un épaulement étant prévu à chacune des extrémités de leur corps qui traverse des trous 19 du diaphragme 3. Chacune de ces extrémités est sertie, l'une sur le fond 12 du couvercle 2, l'autre sur la couronne 50.

La figure 9 montre une variante du mécanisme de la figure 8 équipée d'une rondelle d'assistance 40, analogue à celle qui a été décrite à propos des figures 5 à 7.

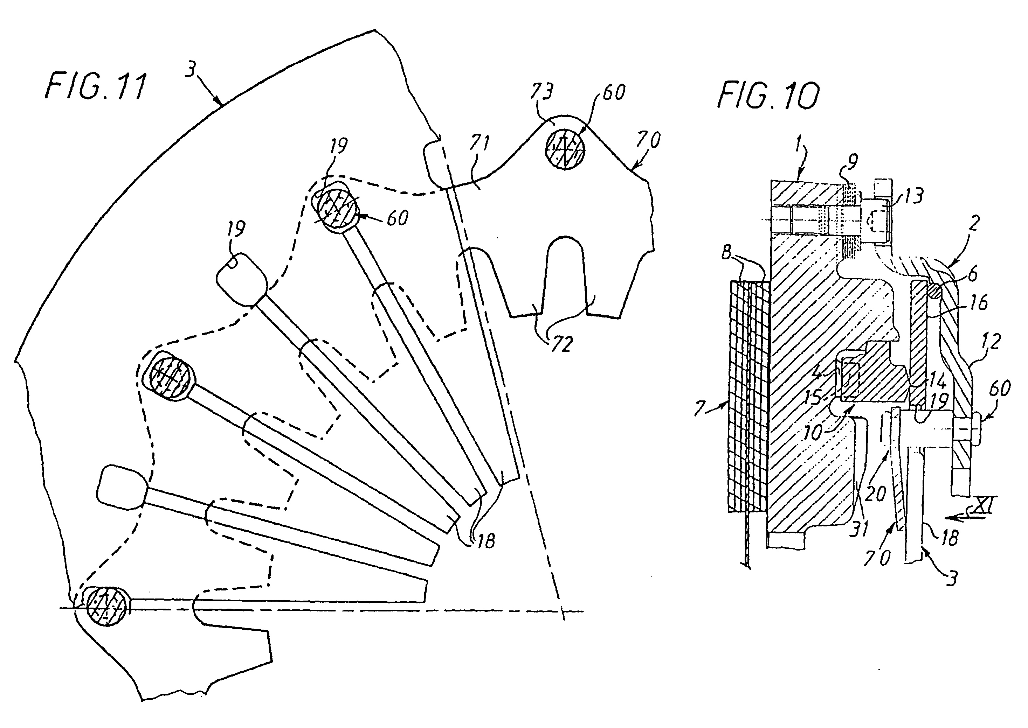

Selon la variante des figures 10 et 11, les moyens de butée 20 comprennent une rondelle d'assistance 70 ; cette rondelle d'assistance 70 comporte une partie périphérique 71 prolongée intérieurement par des extensions 72 radiales qui coopèrent avec les doigts 18 du diaphragme 3 ; avantageusement, il y a autant d'extensions 72 que de doigts 18 de diaphragme, ceci étant valable également pour la rondelle d'assistance 40 des figures 5 à 7 et 9 ; à sa périphérie externe, la rondelle d'assistance 70 présente des plages d'attache 73 pour sa fixation au fond 12 du couvercle 3 par des rivets 60 analogues à ceux des figures 8 et 9. Ainsi, selon cette variante, c'est la rondelle d'assistance 70 elle-même qui limite, en stockage, la course du diaphragme.

Bien entendu, on peut inverser les structures ; par exemple, le retour 22 de la figure 1 peut être dirigé radialement vers l'extérieur ; le jonc 6 peut être formé directement par emboutissage du couvercle.

Le couvercle n'est pas forcément de forme creuse. Par exemple, le plateau de réaction peut présenter à sa périphérie externe une jupe annulaire d'orientation axiale sur laquelle se fixe le couvercle.

De même, on a décrit un mécanisme dans lequel les moyens embrayeurs et débrayeurs sont réalisés en une seule pièce, le diaphragme 3. On peut constituer les moyens embrayeurs et les moyens débrayeurs indépendamment : par exemple, les moyens embrayeurs peuvent être constitués par une rondelle Belleville ou des ressorts hélicoïdaux, et les moyens débrayeurs par des leviers ou un faux diaphragme, c'est-à-dire un diaphragme dont la partie périphérique en forme de rondelle Belleville est dépourvue d'élasticité, du fait par exemple de la présence dans cette partie de fentes débouchant à l'extérieur.

## Revendications

1. Mécanisme d'embrayage pour embrayage à friction, comportant un plateau de réaction (100), un disque de friction (7), portant à sa périphérie externe des garnitures de friction (8), ledit mécanisme comprenant un plateau de pression (1), un couvercle (2) destiné à être fixé sur le plateau de réaction, des moyens embrayeurs (3), à action axiale et commandés par des moyens débrayeurs, agissant entre, d'une part, le couvercle (2) et, d'autre part, le plateau de pression (1) par l'intermédiaire de moyens d'appui (14), le plateau de pression (1) étant solidaire en rotation du couvercle (2) tout en pouvant se déplacer axialement par rapport à lui et étant soumis à l'action de moyens élastiques de rappel (9) rappelant le plateau de pression (1) axialement vers le couvercle (2), ledit embrayage comportant également un dispositif de rattrapage d'usure comprenant des moyens à rampes (11) ayant des rampes (15) disposées circonférentiellement, placés axialement entre les moyens d'appui (14) et le plateau de pression (1), lesdites rampes (15) étant adaptées à coopérer avec des moyens de contre-rampes (4) les moyens embrayeurs comportant un diaphragme (3) qui prend appui sur le couvercle (2) en des points (6) situés radialement à l'extérieur par rapport aux moyens d'appui (14), l'embrayage étant du type tiré, **caractérisé par le fait que** sont prévus des moyens de butée (20) portés par le couvercle (2) et adaptés à limiter la course des moyens embrayeurs (3), dans la position de stockage du mécanisme, au voisinage de leur position de travail.

2. Mécanisme d'embrayage selon la revendication 1, **caractérisé par le fait que** les moyens de butée (20) sont constitués par des pattes issues du fond (12) du couvercle (2) et comprenant une partie axiale (21) qui traverse des trous (19) du diaphragme (3) et dont l'extrémité libre est dans un plan globalement perpendiculaire à l'axe de l'embrayage pour constituer un rebord radial (22).

3. Mécanisme d'embrayage selon la revendication 1, **caractérisé par le fait que** les moyens de butée (20) sont constitués par des colonnettes ayant un corps (23) qui traverse des trous (19) du diaphragme (3), une queue (24) sertie sur le fond (12) du couvercle (2) et une tête (25) sur laquelle est définie une ligne de butée (26) qui fait face au fond (12) du couvercle (2) et avec laquelle le diaphragme (3) est adapté à coopérer en position de stockage.

4. Mécanisme d'embrayage selon la revendication 1, **caractérisé par le fait que** les moyens de butée (20) sont constitués d'une couronne (50) placée entre le plateau de pression (1) et le diaphragme (3) et solidarisée au fond (12) du couvercle (2) par des rivets (60) traversant des trous (19) du diaphragme (3).

5. Mécanisme d'embrayage selon l'une des revendications 1 à 4, **caractérisé par le fait que** le diaphragme (3) coopère, dans la position de stockage du mécanisme, directement avec les moyens de butée (20).

6. Mécanisme d'embrayage selon l'une des revendications 1 à 4, **caractérisé par le fait que** le diaphragme (3) coopère, dans la position de stockage du mécanisme, avec les moyens de butée (20) par l'intermédiaire d'une rondelle élastique d'assistance (40).

7. Mécanisme d'embrayage selon la revendication 1, **caractérisé par le fait que** les moyens de butée (20) sont constitués par une rondelle élastique d'assistance (70) placée axialement entre le plateau de pression (1) et le diaphragme (3) et fixée au fond (12) du couvercle (2) par des rivets (60) traversant des trous (19) du diaphragme (3).

8. Mécanisme d'embrayage selon l'une des revendications 6 ou 7, **caractérisé par le fait que** la rondelle élastique d'assistance (40, 70) présente à sa périphérie interne des extensions (42, 72) délimitées par des fentes radiales et destinées à coopérer avec les doigts (18) du diaphragme (3).

9. Mécanisme d'embrayage selon l'une des revendications 6 à 8, **caractérisé par le fait que** les caractéristiques élastiques de la rondelle d'assistance (40, 70) sont choisies en sorte que, lorsque l'embrayage est embrayé, la friction d'embrayage étant neuve, l'action exercée par la rondelle d'assistance (40, 70) est très faible, voire nulle.

10. Mécanisme d'embrayage selon l'une des revendications 6 à 9, **caractérisé par le fait que** les caractéristiques élastiques de la rondelle d'assistance (40, 70) sont choisies en sorte que, pendant l'opération de débrayage, l'action exercée par la rondelle d'assistance (40, 70) croît puis décroît jusqu'à une valeur déterminée qui peut être très faible voire nulle l'embrayage étant débrayé.

11. Sous-ensemble constitué d'un couvercle et d'un diaphragme, dans lequel le diaphragme est en appui sur le couvercle par sa périphérie externe, **caractérisé par le fait que** le couvercle et le diaphragme ont les caractéristiques du couvercle (2) et du diaphragme (3) du mécanisme selon l'une des revendications 1 à 10.

## Patentansprüche

1. Kupplungsmechanismus für eine Reibungskupplung, insbesondere für Kraftfahrzeuge, umfassend eine Gegenanpressplatte (100), eine Reibscheibe (7), die an ihrem äußeren Umfang Reibbeläge (8) trägt, wobei der besagte Mechanismus eine Druckplatte (1), einen Deckel (2), der zur Befestigung an der Gegenanpressplatte bestimmt ist, und axial wirksame Einrückmittel (3) umfasst, die durch Ausrückmittel betätigt werden, die zwischen dem Deckel (2) einerseits und der Druckplatte (1) andererseits über Auflagemittel (14) wirken, wobei die Druckplatte (1) drehfest mit dem Deckel (2) verbunden ist, während sie sich axial im Verhältnis zu diesem verschieben kann, und der Wirkung von elastischen Rückstellmitteln (9) ausgesetzt ist, die die Druckplatte (1) axial zum Deckel (2) hin zurückstellen, und wobei die besagte Kupplung außerdem eine Verschleißnachstellvorrichtung umfasst, die Rampenmittel (11) mit umfangsmäßig angeordneten Rampen (15) enthält, die axial zwischen den Auflagemitteln (14) und der Druckplatte (1) angeordnet sind, wobei die besagten Rampen (15) mit Gegenrampenmitteln (4) zusammenwirken können, und wobei die Einrückmittel eine Membranfeder (3) umfassen, die auf dem Deckel (2) an Punkten (6) zur Auflage kommt, die, bezogen auf die Auflagemittel (14), radial außen angeordnet sind, wobei die Kupplung in gezogener Konstruktion ausgeführt ist, **dadurch gekennzeichnet, dass** am Deckel (2) angebrachte Anschlagmittel (20) vorgesehen sind, die den Verstellweg der Einrückmittel (3) in der Lagerposition des Mechanismus in der Nähe ihrer Arbeitsposition begrenzen können.

2. Mechanismus nach Anspruch 1, **dadurch gekennzeichnet , dass** die Anschlagmittel (20) aus Ansätzen bestehen, die vom Boden (12) des Deckels (2) ausgehen und einen axialen Teil (21) umfassen, der durch Löcher (19) der Membranfeder (3) hindurchgeht und dessen freies Ende in einer Ebene angeordnet ist, die insgesamt senkrecht zur Achse der Kupplung verläuft, um eine radiale Randleiste (22) zu bilden.

3. Mechanismus nach Anspruch 1, **dadurch gekennzeichnet , dass** die Anschlagmittel (20) aus Distanzbolzen mit einem Körper (23), der durch Löcher (19) der Membranfeder (3) hindurchgeht, einem Endstück (24), das am Boden (12) des Deckels (2) aufgepresst ist, und einem Kopf (25) bestehen, an dem eine Anschlaglinie (26) definiert ist, die dem Boden (12) des Deckels (2) gegenüberliegt und mit der die Membranfeder (3) in Lagerposition zusammenwirken kann.

4. Mechanismus nach Anspruch 1, **dadurch gekennzeichnet , dass** die Anschlagmittel (20) aus einem Kranz (50) bestehen, der zwischen der Druckplatte (1) und der Membranfeder (3) angeordnet und durch Niete (60), die durch Löcher (19) der Membranfeder (3) hindurchgehen, fest mit dem Boden (12) des Deckels (2) verbunden ist.

5. Mechanismus nach einem der Ansprüche 1 bis 4, **dadurch gekennzeichnet, dass** die Membranfeder (3) in der Lagerposition des Mechanismus direkt mit den Anschlagmitteln (20) zusammenwirkt.

6. Mechanismus nach einem der Ansprüche 1 bis 4, **dadurch gekennzeichnet, dass** die Membranfeder (3) in der Lagerposition des Mechanismus über eine Unterstützungsfederscheibe (40) mit den Anschlagmitteln (20) zusammenwirkt.

7. Mechanismus nach Anspruch 1, **dadurch gekennzeichnet , dass** die Anschlagmittel (20) aus einer Unterstützungsfederscheibe (40) bestehen, die axial zwischen der Druckplatte (1) und der Membranfeder (3) angeordnet und am Boden (12) des Deckels (2) durch Niete (60) befestigt ist, die durch Löcher (19) der Membranfeder (3) hindurchgehen.

8. Mechanismus nach Anspruch 6 oder 7, **dadurch gekennzeichnet, dass** die Unterstützungsfederscheibe (40) an ihrem inneren Umfang Erweiterungen (42, 72) aufweist, die durch radiale Schlitze begrenzt und dazu bestimmt sind, mit den Fingern (18) der Membranfeder (3) zusammenzuwirken.

9. Mechanismus nach einem der Ansprüche 6 bis 8, **dadurch gekennzeichnet, dass** die Elastizitätseigenschaften der Unterstützungsfederscheibe (40, 70) so gewählt sind, dass bei eingerückter Kupplung und bei neuer Reibungskupplungsscheibe die durch die Unterstützungsfederscheibe (40, 70) ausgeübte Wirkung sehr gering bzw. gleich null ausfällt.

10. Mechanismus nach einem der Ansprüche 6 bis 9, **dadurch gekennzeichnet, dass** die Elastizitätseigenschaften der Unterstützungsfederscheibe (40, 70) so gewählt sind, dass während des Ausrückvorgangs die durch die Unterstützungsfederscheibe (40, 70) ausgeübte Wirkung zunimmt und dann bis zu einem bestimmten Wert abnimmt, der sehr niedrig bzw. gleich null sein kann, wenn die Kupplung ausgerückt ist.

11. Untergruppe, die aus einem Deckel und einer Membranfeder besteht, wobei die Membranfeder mit ihrem äußeren Umfang auf dem Deckel aufliegt, **dadurch gekennzeichnet, dass** der Deckel und die Membranfeder die Merkmale des Deckels (2) und der Membranfeder (3) des Mechanismus nach einem der Ansprüche 1 bis 10 aufweisen.

## Claims

1. Clutch mechanism for a friction clutch, having a reaction plate (100), a friction disc (7), carrying friction linings (8) at its external periphery, the said mechanism comprising a thrust plate (1), a cover (2) intended to be fixed to the reaction plate, axially acting engagement means (3) controlled by disengagement means, acting between on the one hand the cover (2) and on the other hand the thrust plate (1) by means of abutment means (14), the thrust plate (1) being fixed with respect to rotation to the cover (2) whilst being able to move axially with respect to it and being subjected to the action of elastic return means (9) returning the thrust plate (1) axially towards the cover (2), the said clutch also having a wear take-up device comprising ramp means (11) having circumferentially disposed ramps (15) placed axially between the abutment means (14) and the thrust plate (1), the said ramps (15) being adapted to cooperate with counter-ramp means (4), the engagement means having a diaphragm (3) which bears on the cover (2) at points (6) situated radially towards the outside with respect to the abutment means (14), the clutch being of the pulled type **characterised by** the fact that there are provided stop means (20) carried by the cover (2) and adapted to limit the travel of the engagement means (3), in the storage position of the mechanism, close to their working position.

2. Clutch mechanism according to Claim 1, **characterised by** the fact that the stop means (20) consist of lugs issuing from the base (12) of the cover (2) and comprising an axial part (21) which passes through holes (19) in the diaphragm (3) and whose free end is in a plane roughly perpendicular to the axis of the clutch in order to constitute a radial rim (22).

3. Clutch mechanism according to Claim 1, **characterised by** the fact that the stop means (20) consist of small columns having a body (23) which passes through holes (19) in the diaphragm (3), a tail (24) crimped to the base (12) of the cover (2) and a head (25) on which there is defined a stop line (26) which faces the base (12) of the cover (2) and with which the diaphragm (3) is adapted to cooperate in the storage position.

4. Clutch mechanism according to Claim 1, **characterised by** the fact that the stop means (20) consists of an annulus (50) placed between the thrust plate (1) and the diaphragm (3) and fixed to the base (12) of the cover (2) by rivets (60) passing through holes (19) in the diaphragm (3).

5. Clutch mechanism according to one of Claims 1 to 4, **characterised by** the fact that the diaphragm (3) cooperates, in the storage position of the mechanism, directly with the stop means (20).

6. Clutch mechanism according to one of Claims 1 to 4, **characterised by** the fact that the diaphragm (3) cooperates, in the storage position of the mechanism, with the stop means (20) by means of an elastic assistance washer (40).

7. Clutch mechanism according to Claim 1, **characterised by** the fact that the stop means (20) consist of an elastic assistance washer (70) placed axially between the thrust plate (1) and the diaphragm (3) and fixed to the base (12) of the cover (2) by rivets (60) passing through holes (19) in the diaphragm (3).

8. Clutch mechanism according to one of Claims 6 or 7, **characterised by** the fact that the elastic assistance washer (40, 70) has, at its internal periphery, extensions (42, 72) delimited by radial slots and intended to cooperate with the fingers (18) of the diaphragm (3).

9. Clutch mechanism according to one of Claims 6 to 8, **characterised by** the fact that the elastic characteristics of the assistance washer (40, 70) are chosen so that, when the clutch is engaged, the clutch friction member being new, the action exerted by the assistance washer (40, 70) is very small or even nil.

10. Clutch mechanism according to one of Claims 6 to 9, **characterised by** the fact that the elastic characteristics of the assistance washer (40, 70) are chosen so that, during the declutching operation, the action exerted by the assistance washer (40, 70) increases and then decreases to a given value which can be very small or even nil, the clutch being disengaged.

11. Subassembly consisting of a cover and a diaphragm, in which the diaphragm is in abutment on the cover through its external periphery, **characterised by** the fact that the cover and diaphragm have the characteristics of the cover (2) and diaphragm (3) of the mechanism according to one of Claims 1 to 10.
